# FASCICULE DE BREVET EUROPEEN

(11) **EP 3 694 639 B1**
(45) Date de publication et mention de la délivrance du brevet: **19.05.2021**
(21) Numéro de dépôt: 18778922.7
(22) Date de dépôt: 28.09.2018
(51) Int. Cl.: B01J 8/04

(54) **DISPOSITIF DE MELANGE ET DE DISTRIBUTION AVEC OUVERTURE LONGITUDINALE**
MISCH- UND VERTEILVORRICHTUNG MIT LÄNGSÖFFNUNG
MIXING AND DISTRIBUTION DEVICE WITH LONGITUDINAL OPENING

(30) Priorité: 12.10.2017 FR 1759551
(43) Date de publication de la demande: 19.08.2020
(73) Titulaire: IFP Energies nouvelles, 92852 Rueil-Malmaison (FR)
(72) Inventeur: AUGIER, Frederic, 69360 Saint Symphorien d'Ozon (FR); BEARD, Philippe, 69230 Saint Genis-Laval (FR); PLAIS, Cecile, 69420 Les Haies (FR)
(74) Mandataire: IFP Energies nouvelles
(86) Numéro de dépôt international: PCT/EP2018/076546
(87) Numéro de publication internationale: WO 2019/072601

(56) Documents cités:
- WO-A1-2014/210276
- FR-A1- 3 034 323

## Description

### Domaine technique

La présente invention s'applique dans le domaine des réactions exothermiques et plus particulièrement aux réactions d'hydrotraitement, d'hydrodésulfuration, d'hydrodéazotation, d'hydrocraquage, d'hydrogénation, d'hydrodéoxygénation, d'hydroisomérisation, d'hydrodéparaffinage ou encore d'hydrodéaromatisation réalisées dans un réacteur en lit fixe. L'invention concerne plus particulièrement un dispositif de mélange et de distribution de fluides dans un réacteur à écoulement co-courant descendant et son utilisation pour la réalisation de réactions exothermiques.

### Etat de la technique

Les réactions exothermiques réalisées par exemple en raffinage et/ou en pétrochimie nécessitent d'être refroidies par un fluide additionnel, appelé fluide de trempe, pour éviter un emballement thermique du réacteur catalytique dans lequel elles sont effectuées. Les réacteurs catalytiques utilisés pour ces réactions comprennent généralement au moins un lit de catalyseur solide. Le caractère exothermique des réactions nécessite de conserver un gradient axial de température homogène sur la section de réacteur, et un gradient radial de température proche de zéro au sein du réacteur afin d'éviter l'existence de points chauds dans le lit de catalyseur compris dans le réacteur. Des zones trop chaudes peuvent diminuer prématurément l'activité du catalyseur et/ou conduire à des réactions non sélectives et/ou conduire à des emballements thermiques. Il est donc important de disposer d'au moins une chambre de mélange dans un réacteur, située entre deux lits de catalyseur, qui permette une répartition homogène en température des fluides sur une section de réacteur et un refroidissement des fluides réactionnels à une température désirée.

Pour effectuer cette homogénéisation l'homme de l'art est souvent conduit à utiliser un agencement spécifique d'internes souvent complexes comportant une introduction du fluide de trempe la plus homogène possible dans la section du réacteur. Par exemple, le document FR 2 824 495 A1 décrit un dispositif de trempe permettant d'assurer un échange efficace entre le ou les fluide(s) de trempe et le ou les fluide(s) du procédé. Ce dispositif est intégré dans une enceinte et comprend une canne d'injection du fluide de trempe, un baffle de collecte des fluides, la boite de trempe proprement dite, opérant le mélange entre le fluide de trempe et le fluide réactionnel s'écoulant de manière descendante, et un système de distribution composé d'une cuvette perforée et d'un plateau de distribution. La boîte de trempe comporte un déflecteur assurant la mise en mouvement tourbillonnaire des fluides selon une direction sensiblement non radiale et non parallèle à l'axe de ladite enceinte et en aval du déflecteur, dans le sens de circulation du fluide réactionnel, au moins une section de passage de sortie du mélange de fluides formé dans la boîte. Ce dispositif permet de pallier certains inconvénients des différents systèmes de l'art antérieur mais reste encombrant.

Pour remédier au problème d'encombrement, un dispositif de mélange de fluides dans un réacteur à écoulement descendant a été développé, et est décrit dans le document FR 2 952 835 A1. Ce dispositif comprend un moyen de collecte horizontal pourvu d'une conduite de collecte verticale pour recevoir les fluides, un moyen d'injection placé dans la conduite de collecte, et une chambre de mélange annulaire de section circulaire située en aval du moyen de collecte dans le sens de circulation des fluides. La chambre de mélange comprend une extrémité d'entrée reliée à la conduite de collecte et une extrémité de sortie permettant le passage des fluides, ainsi qu'un plateau de pré-distribution horizontal comprenant au moins une cheminée. L'avantage de ce dispositif est qu'il est plus compact que celui décrit précédemment, et permet d'assurer un bon mélange des fluides et une bonne homogénéité en température.

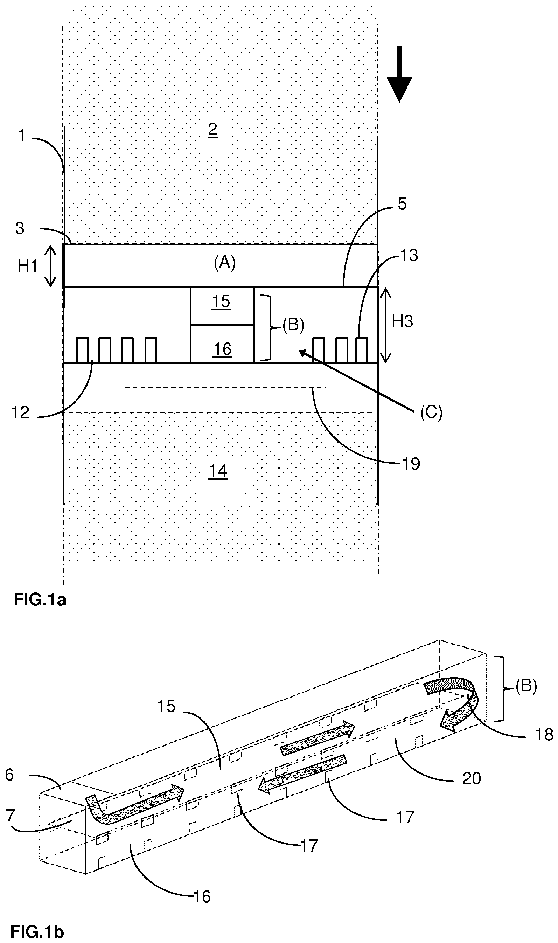

Dans le but de réduire encore plus l'encombrement du dispositif de mélange et de distribution, une autre solution proposée dans le document FR 3 034 323 est de réaliser un dispositif de mélange et de distribution de fluides dans lequel la zone de mélange et la zone de distribution des fluides sont situées au même niveau. Un tel dispositif est représenté aux figures 1a à 1c et sera décrit plus en détail ci-après. Plus particulièrement, la zone de mélange comprend une enceinte de mélange des fluides et une enceinte d'échange des fluides reliée et en communication avec l'enceinte de mélange. L'enceinte de mélange est de préférence située au-dessus de l'enceinte d'échange. Ainsi, la configuration de la zone de mélange permet le mélange des fluides dans l'enceinte de mélange et l'écoulement dudit mélange vers l'enceinte d'échange. Le mélange entre le fluide réactionnel et le fluide de trempe continue de s'effectuer au niveau de l'enceinte d'échange puis se dirige vers le plateau de distribution en passant par les sections de passage latérales situées sur les parois de l'enceinte d'échange. Cependant, lorsque le fluide de trempe et/ou le fluide réactionnel est de type gaz, un flux gazeux trop important peut chasser les fluides de type liquide et/ou liquide/gaz sur le plateau de distribution et sécher certaines zones dudit plateau. Par conséquent, les cheminées du plateau de distribution ne seront pas toutes alimentées de manière équivalente et il peut en résulter un déséquilibre de débit au niveau du lit de catalyseur situé en aval dudit plateau de distribution.

Un but de la présente invention vise à remédier à ce problème en proposant un dispositif de mélange et de distribution permettant une meilleure réparation des fluides sur le plateau de distribution.

### Objets de l'invention

Un premier objet selon l'invention concerne un dispositif de mélange et de distribution de fluides pour un réacteur catalytique à écoulement descendant, ledit dispositif comprenant :
- au moins une zone de collecte (A) comprenant au moins un moyen de collecte ;
- au moins une conduite de collecte sensiblement verticale apte à recevoir un fluide réactionnel collecté par ledit moyen de collecte et au moins un moyen d'injection débouchant dans ladite conduite de collecte pour injecter un fluide de trempe ;
- au moins une zone de mélange (B), située en aval de ladite conduite de collecte dans le sens de circulation des fluides, ladite zone de mélange (B) comprenant au moins un enceinte de mélange des fluides de longueur L1', ladite zone de mélange comprenant une première extrémité en communication avec ladite conduite de collecte et une seconde extrémité en communication avec une enceinte d'échange des fluides de longueur L2', située en-dessous et superposée à ladite enceinte de mélange ;
- au moins une zone de distribution (C) située au même niveau que la zone de mélange (B), en aval de ladite zone de mélange (B) dans le sens de la circulation des fluides, ladite zone de distribution (C) comprenant un plateau de distribution supportant une pluralité de cheminées ;
   caractérisé en ce que la longueur L2' de ladite enceinte d'échange est strictement supérieure à la longueur L1' de ladite enceinte de mélange de manière à créer un plafond au niveau de ladite enceinte d'échange, ledit plafond comprenant au moins une ouverture longitudinale apte au passage des fluides de ladite enceinte d'échange à ladite zone de distribution (C).

De préférence, le rapport entre la longueur L1' de l'enceinte de mélange et la longueur L2' de l'enceinte d'échange est compris entre 0,1 et 0,9.

Avantageusement, le rapport entre la surface du plafond et la surface de la ou les ouverture(s) longitudinale(s) est compris entre 0,2 et 1.

De préférence, le rapport entre la surface du plafond et la surface de la ou les ouverture(s) longitudinale(s) est égal à 1.

Avantageusement, le dispositif comprend en outre au moins une pluralité de panneaux horizontaux situés dans la zone de distribution (C), en-dessous de l'ouverture du plafond de l'enceinte d'échange, et au-dessus des cheminées ou sur les cheminées du plateau de distribution.

Avantageusement, lesdits panneaux horizontaux se situent à une hauteur comprise entre 0 et 10 cm au-dessus des cheminées du plateau de distribution.

De préférence, lesdits panneaux horizontaux sont espacés les uns des autres d'une distance comprise entre 0 et 5 cm.

De préférence, ladite enceinte d'échange comprend en outre sur ses parois latérales une pluralité de sections de passage latéral apte au passage des fluides de ladite enceinte d'échange à ladite zone de distribution (C).

Avantageusement, le dispositif comprend en outre au moins un déflecteur latéral situé au niveau de ladite zone de distribution (C) en vis-à-vis d'au moins une section de passage latéral.

Avantageusement, le dispositif comprend une paire de déflecteurs latéraux situés de part et d'autre de l'enceinte d'échange.

De préférence, ladite zone de mélange (B) est décentrée par rapport à l'axe central de la zone de distribution (C), formant deux zones (Z1) et (Z2) sur le plateau de distribution dont le ratio R définit comme le rapport entre la surface de la zone (Z1) et la zone (Z2) est compris entre 0 et 1, les valeurs 0 et 1 étant exclues.

Avantageusement, l'enceinte de mélange comprend un fond comportant une bordure d'extrémité de forme biseautée et forme un angle θ par rapport à l'axe longitudinal XX' de l'enceinte de mélange compris entre 20°et 70°.

De préférence, le ratio volume entre ladite enceinte d'échange et ladite enceinte de mélange est compris entre 5 et 60 %.

De préférence, l'enceinte d'échange est située à une distance « d » comprise entre 20 et 150 mm du plateau de distribution.

Un autre objet selon l'invention concerne un réacteur catalytique à écoulement descendant comportant une enceinte renfermant au moins deux lits fixes de catalyseur séparés par une zone intermédiaire comportant un dispositif de mélange et de distribution de fluides selon l'invention.

### Description des figures

La figure 1a représente une coupe axiale d'un réacteur catalytique à écoulement descendant comprenant au moins deux lits de catalyseur solide, et comprenant un dispositif compact de mélange et de distribution de fluides tel que décrit dans le document FR 3 034 323.
La figure 1b représente respectivement une vue détaillée de la zone de mélange (B) du dispositif selon la figure 1a (les traits pointillés représentent les parties non visibles de la zone de mélange, i.e. se trouvant à l'intérieur de ladite zone).
La figure 1c est une vue en perspective de la zone de mélange (B) du dispositif selon la figure 1a.
La figure 2a est une vue en perspective de la zone de mélange (B) du dispositif selon l'invention.
La figure 2b représente une vue en perspective de la zone de mélange (B) du dispositif selon l'invention comprenant des sections de passage latéral.
La figure 2c représente une coupe transversale du dispositif selon l'invention, lequel dispositif comprend une pluralité de panneaux horizontaux **33.**
La figure 2d représente une coupe axiale d'un réacteur catalytique à écoulement descendant comprenant au moins deux lits de catalyseur solide, et comprenant un dispositif compact de mélange et de distribution de fluides selon l'invention.
La figure 3 représente une coupe transversale du dispositif selon l'invention selon un mode de réalisation particulier. La zone de mélange (B) est décentrée par rapport à l'axe central de la zone de distribution (C) formant ainsi un plateau de distribution **12** comprenant deux zones, **Z1** et **Z2,** de surfaces différentes.
La figure 4 représente une vue en coupe selon l'axe (XX') de la zone de mélange (B) du dispositif selon l'invention tel que présenté en figure 2b.

### Description détaillée de l'invention

### Définitions

Au sens de l'invention, on entend par enceinte de mélange, l'espace dans lequel on réalise le mélange entre un fluide réactionnel et un fluide de trempe.

On entend par enceinte d'échange, l'espace dans lequel un fluide réactionnel et un fluide de trempe mélangés sont en contact direct avec une zone de distribution des fluides via au moins une ouverture longitudinale, optionnellement des sections de passage latérales.

### Description détaillée

Le dispositif compact de mélange et de distribution selon l'invention est utilisé dans un réacteur dans lequel s'effectuent des réactions exothermiques telles que des réactions d'hydrotraitement, d'hydrodésulfuration, d'hydrodéazotation, d'hydrocraquage, d'hydrogénation, d'hydrodéoxygénation, d'hydroisomérisation, d'hydrodéparaffinage ou encore d'hydrodéaromatisation. Généralement, le réacteur a une forme allongée le long d'un axe sensiblement vertical. On fait circuler du haut vers le bas dudit réacteur au moins un fluide réactionnel (appelé aussi *«process fluid»* selon la terminologie anglo-saxonne) à travers au moins un lit fixe de catalyseur. Avantageusement, en sortie de chaque lit à l'exception du dernier, le fluide réactionnel est recueilli puis est mélangé à un fluide de trempe (appelé aussi *«quench fluid»* selon la terminologie anglo-saxonne) dans ledit dispositif avant d'être distribué au lit de catalyseur situé en aval d'un plateau de distribution. L'aval et l'amont sont définis par rapport au sens de l'écoulement du fluide réactionnel. Le fluide réactionnel peut être un gaz ou un liquide ou un mélange contenant du liquide et du gaz ; cela dépend du type de réaction effectuée dans le réacteur.

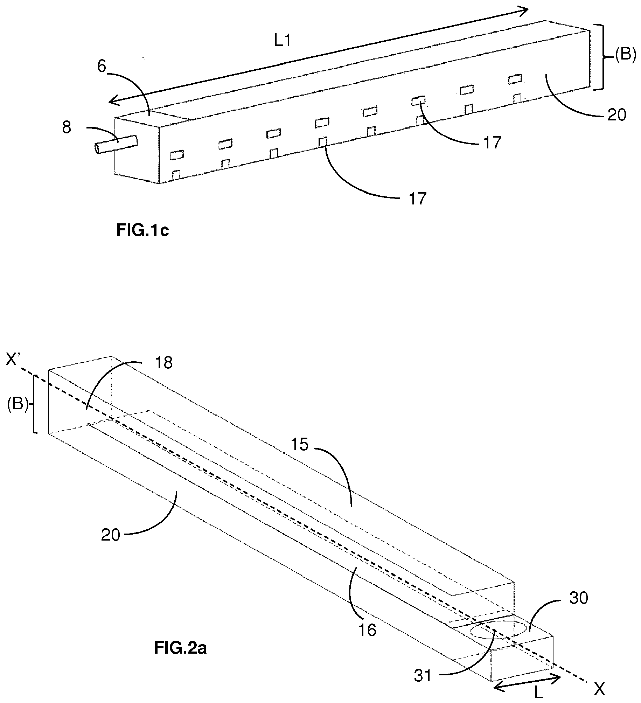

En se reportant aux figures 1a à 1c, le dispositif de mélange et de distribution selon l'art antérieur peut être disposé dans un réacteur **1** de forme allongée le long d'un axe sensiblement vertical dans lequel on fait circuler du haut vers le bas au moins un fluide réactionnel à travers au moins un lit de catalyseur **2.** Le dispositif est disposé sous le lit de catalyseur **2,** par rapport au sens d'écoulement du fluide réactionnel dans l'enceinte **1.** Une grille de support **3** permet de supporter le lit de catalyseur **2** de manière à dégager une zone de collecte (A) disposée sous le lit de catalyseur **2.** La zone de collecte (A) est nécessaire pour permettre le drainage du fluide réactionnel jusqu'à une conduite de collecte **7** (cf. figures 1b et 1c). Le fluide réactionnel qui s'écoule est par exemple composé d'une phase gaz et d'une phase liquide. Le fluide réactionnel traversant le lit de catalyseur **2** est collecté par un moyen de collecte **5** (appelé aussi ici baffle de collecte) sensiblement horizontal conduisant à une conduite de collecte **7** sensiblement verticale, disposée soit en-dessous de la zone de collecte (A) au niveau d'une zone appelée zone de mélange (B) (telle que représentée sur les figures 1b et 1c), soit au niveau de la zone de collecte (A) (non représentée sur les figures). Par sensiblement vertical(e) et par sensiblement horizontal(e), on entend au sens de la présente invention une variation d'un plan avec la verticale, respectivement l'horizon, d'un angle β compris entre ± 5 degrés. Le moyen de collecte 5 (cf. figure 1a) est constitué d'une plaque pleine disposée dans le plan perpendiculaire à l'axe longitudinal de l'enceinte sous la grille de support **3** du lit de catalyseur **2.** La plaque du moyen de collecte 5 s'étend radialement sur toute la surface du réacteur **1.** Elle comporte à une de ses extrémités une ouverture **6** (cf. figures 1b et 1c) à laquelle est reliée ladite conduite de collecte **7.** Le moyen de collecte **5** permet de recueillir l'écoulement du fluide réactionnel provenant du lit catalytique **2** en amont et de le diriger vers ladite conduite de collecte **7.** Le moyen de collecte **5** est distant de la grille de support **3** du lit de catalyseur **2** d'une hauteur H1 (figure 1a). La hauteur H1 est choisie de manière à limiter la perte de charge lors de la collecte du fluide s'écoulant du lit de catalyseur **2** et à limiter la hauteur de garde, i.e. la hauteur formée par le liquide accumulé dans le moyen de collecte **5.** La hauteur de garde ne modifie pas le drainage du fluide réactionnel vers la conduite de collecte **7,** ni son écoulement dans cette conduite, ni son écoulement à travers le lit catalytique supérieur **2.** Lorsque la conduite de collecte **7** et le moyen d'injection **8** (figure 1c) sont situés au niveau de la zone de mélange (B), la hauteur H1 est comprise entre 10 et 500 mm, de préférence entre 10 et 200 mm, plus préférentiellement entre 30 et 150 mm, de manière encore plus préférée entre 40 et 100 mm. Ainsi, le fluide réactionnel issu du lit **2** est contraint dans la zone de collecte (A) à passer par la conduite de collecte **7.** Lorsque la conduite de collecte **7** et le moyen d'injection **8** sont situés au niveau de la zone de collecte (A), la hauteur H1 est comprise entre 10 et 400 mm, de préférence entre 30 et 300 mm, et encore plus préférentiellement entre 50 et 250 mm. En-dessous de la zone de collecte (A) se trouve une zone de mélange (B) et une zone de distribution (C). En se reportant aux figures 1b à 1c, la zone de mélange (B) comprend une conduite de collecte **7** sensiblement verticale apte à recevoir le fluide réactionnel collecté par le moyen de collecte **5** et le fluide de trempe provenant du moyen d'injection **8** (cf. figure 1c) débouchant dans ladite conduite de collecte **7.**

La zone de mélange (B) comprend en outre une enceinte de mélange **15,** de longueur L1, (cf. figures 1a à 1c) située en aval du moyen de collecte **5** dans le sens de circulation des fluides. La conduite de collecte **7,** qui est en communication avec l'enceinte de mélange **15,** peut être située au-dessus de l'enceinte de mélange **15** ou au même niveau que ladite enceinte. De préférence, la conduite de collecte **7** est située au même niveau que l'enceinte de mélange **15** (cf. notamment figure 1b). De même, la conduite d'injection **8** peut déboucher au-dessus de l'enceinte de mélange **15,** au même niveau que ladite enceinte, ou directement à l'intérieur de ladite enceinte de mélange **15** par l'intermédiaire d'un dispositif connu de l'homme de métier, par exemple un tube perforé traversant l'enceinte de mélange **15.** L'injection du fluide de trempe peut être réalisée à co-courant, en courant croisé, voire en contre-courant par rapport au fluide réactionnel provenant de la zone de collecte (A).

La zone de distribution (C) quant à elle comprend un plateau de distribution **12** supportant une pluralité de cheminées **13.** La zone de distribution (C), s'étendant sur une hauteur H3 (cf. figure 1a), comprend un plateau de distribution **12** (appelée aussi ici plateau distributeur ou plaque de distribution) et une pluralité de cheminées **13.** Plus précisément, les cheminées **13** sont ouvertes à leur extrémité supérieure par une ouverture supérieure et présentent le long de leur paroi latérale une série d'orifices latéraux destinés au passage séparé de la phase liquide (par les orifices) et la phase gaz (par l'ouverture supérieure) à l'intérieur des cheminées **13,** de manière à réaliser leur mélange intime à l'intérieur desdites cheminées **13.** La forme des orifices latéraux peut être très variable, généralement circulaire ou rectangulaire, ces orifices étant préférentiellement répartis sur chacune des cheminées selon plusieurs niveaux sensiblement identiques d'une cheminée à l'autre, généralement au moins un niveau, et de préférence de 1 à 10 niveaux, de manière à permettre l'établissement d'une interface aussi régulière que possible entre la phase gaz et la phase liquide.

Une caractéristique du dispositif selon l'art antérieur réside dans la mise en place de la zone de mélange (B) au même niveau que la zone de distribution (C), et en ce que ladite zone de mélange (B) est constituée d'une enceinte de mélange **15** des fluides reliée et en communication avec une enceinte d'échange **16** des fluides, de même longueur L1 que l'enceinte de mélange **15,** (cf. figures 1a à 1c), ladite enceinte d'échange **16** étant située en aval de l'enceinte de mélange **15** dans le sens de la circulation des fluides. Plus particulièrement, l'enceinte d'échange **16** est située au-dessous de l'enceinte de mélange **15.** Les fluides passent de l'enceinte de mélange **15** à l'enceinte d'échange **16** au moyen d'une une ouverture **18** située à l'extrémité de sortie des fluides de l'enceinte de mélange **15** dans le sens de la circulation des fluides (comme indiqué par les flèches sur la figure 1b). On entend par enceinte de mélange **15,** l'espace dans lequel on réalise le mélange entre le fluide réactionnel et le fluide de trempe. On entend par enceinte d'échange **16,** l'espace dans lequel le fluide réactionnel et le fluide de trempe mélangés sont en contact direct avec la zone de distribution (C) via des sections de passage latéral **17.** En se reportant aux figures 1a à 1c, l'enceinte d'échange **16,** comprend sur ses parois latérales **20** des sections de passage latéral **17** apte au passage des fluides de la zone de mélange (B) à la zone de distribution (C). Ainsi, seule l'enceinte d'échange **16** est en contact direct avec la zone de distribution (C).

Cependant, lorsque l'un ou l'autre du fluide de trempe ou du fluide réactionnel est de type gaz, l'utilisation d'un débit gazeux trop important peut chasser les fluides de type liquide ou les mélanges de type liquide/gaz sur le plateau de distribution **12** et ainsi sécher certaines zones dudit plateau. Par conséquent, les cheminées **13** du plateau de distribution **12** ne sont pas toutes alimentées de manière équivalente et il peut en résulter un déséquilibre du débit et de la répartition des fluides au niveau du lit de catalyseur **14** situé en aval du plateau de distribution **12.**

La Demanderesse a mis au point un perfectionnement du dispositif de mélange et de distribution des fluides selon l'art antérieur permettant de pallier cet inconvénient, sans pour autant modifier l'encombrement dudit dispositif, en proposant un dispositif comprenant une enceinte d'échange prolongée selon l'axe longitudinal (XX') par rapport à l'enceinte de mélange de manière à créer un plafond comprenant une ouverture longitudinale apte au passage des fluides de l'enceinte d'échange à la zone de distribution.

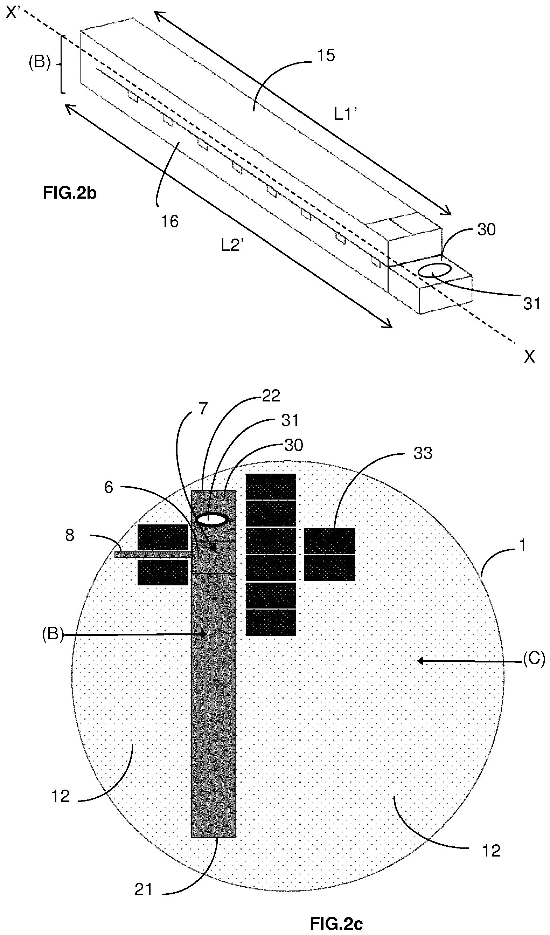

En se reportant aux figures 2a et 2b, le dispositif de mélange et de distribution des fluides selon l'invention comprend une zone de mélange (B) comportant une conduite de collecte **7** sensiblement verticale apte à recevoir le fluide réactionnel collecté par le moyen de collecte (non représenté sur les figures) et le fluide de trempe provenant du moyen d'injection **8** débouchant dans ladite conduite de collecte **7.** La zone de mélange (B) comprend une enceinte de mélange **15,** de longueur L1', située en aval du moyen de collecte dans le sens de circulation des fluides. La section de l'enceinte de mélange **15** est rectangulaire. La conduite de collecte **7,** qui est en communication avec l'enceinte de mélange **15,** peut être située au-dessus de l'enceinte de mélange **15** ou être incluse dans ladite enceinte de mélange **15.** De préférence, la conduite de collecte **7** est incluse dans l'enceinte de mélange **15.** De même, la conduite d'injection **8** peut déboucher au-dessus de l'enceinte de mélange **15,** au même niveau que ladite enceinte, ou directement à l'intérieur de ladite enceinte de mélange **15** par l'intermédiaire d'un dispositif connu de l'homme de métier, par exemple un tube perforé traversant la zone de mélange **15.** L'injection du fluide de trempe peut être réalisée à co-courant, en courant croisé, voire en contre-courant par rapport au fluide réactionnel provenant de la zone de collecte (A). La zone de mélange (B) comprend également une enceinte d'échange **16** des fluides, de longueur L2', l'enceinte d'échange **16** étant située en aval de l'enceinte de mélange **15** dans le sens de la circulation des fluides. La section de l'enceinte d'échange **16** est rectangulaire. Selon l'invention, l'enceinte d'échange **16** est située au-dessous de l'enceinte de mélange **15,** et est de préférence superposée à l'enceinte de mélange **15.** Les fluides passent de l'enceinte de mélange **15** à l'enceinte d'échange **16** via une ouverture **18** située à l'extrémité de sortie de l'enceinte de mélange **15** dans le sens de la circulation des fluides. La configuration de la zone de mélange (B) permet le mélange des fluides dans l'enceinte de mélange **15** et l'écoulement dudit mélange vers l'enceinte d'échange **16.** Le mélange entre le fluide réactionnel et le fluide de trempe continue de s'effectuer au niveau de l'enceinte d'échange **16.**

Selon un aspect essentiel de l'invention, la longueur L2' de l'enceinte d'échange **16** est strictement supérieure à la longueur L1' de l'enceinte de mélange **15,** de manière à créer un plafond **30** au niveau de ladite enceinte d'échange **16,** ledit plafond **30** comprenant au moins une ouverture longitudinale **31** apte au passage des fluides de ladite enceinte d'échange **16** à ladite zone de distribution (C). Un tel agencement du dispositif selon l'invention permet, en créant une ouverture longitudinale **31** sur l'enceinte d'échange, de mieux gérer le débit des fluides, notamment de type gaz, sortant de l'enceinte d'échange **16,** et donc de limiter l'impact du débit des fluides sur le plateau de distribution **12** de la zone de distribution (C). De préférence, le rapport entre la longueur L1' de l'enceinte de mélange **15** et la longueur L2' de l'enceinte d'échange **16** est compris entre 0,1 et 0,9, de préférence entre 0,3 et 0,9. Avantageusement, le rapport entre la surface du plafond **30** et la surface de la ou les ouverture(s) longitudinale(s) **31** est compris entre 0,2 et 1, de préférence entre 0,3 et 0,8. Dans un mode de réalisation particulier selon l'invention, le rapport entre la surface du plafond **30** et la surface de ladite ouverture longitudinale **31** est égal à 1, ce qui signifie que le plafond **30** est totalement ouvert sur la zone de distribution (C).

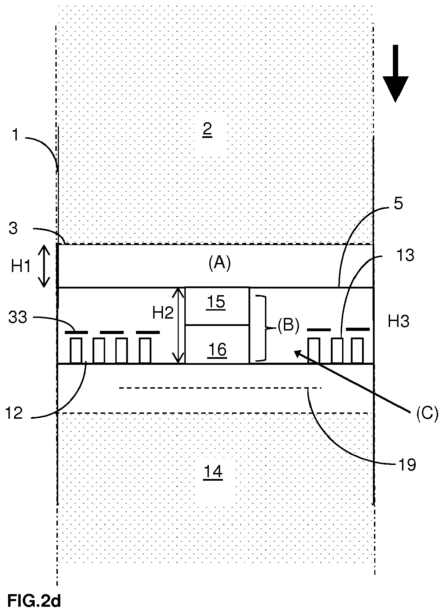

Afin de garantir une distribution homogène des fluides sur le plateau de distribution **12,** le dispositif selon l'invention comprend avantageusement une pluralité de panneaux horizontaux **33** (cf. figure 2c) situés dans la zone de distribution (C), en-dessous de l'ouverture **31** du plafond **30** de l'enceinte d'échange **16,** mais au-dessus des cheminées **13** ou posés sur les cheminées **13** du plateau de distribution **12** (cf. figure 2d). Lesdits panneaux horizontaux **33** sont de préférence espacés les uns des autres d'une distance comprise entre 0 et 5 cm, de préférence entre 0,5 et 1 cm, de manière à permettre l'écoulement des fluides vers l'espace situé entre les panneaux horizontaux **33** et le plateau de distribution **12.** De préférence, lesdits panneaux horizontaux **33** se situent à une hauteur comprise entre 0 et 10 cm des cheminées **13** du plateau de distribution **12.** Lorsque les panneaux horizontaux sont posés sur les cheminées du plateau de distribution, ces dernières sont configurées de manière à permettre le passage des fluides de type gaz, par exemple en présentant une extrémité biseautée. Les panneaux horizontaux **33** occupent une surface compris entre 5 et 95 % par rapport à la surface radiale du réacteur, de préférence entre 5 et 30 %. Un tel agencement du dispositif selon l'invention permet de garantir une bonne efficacité de mélange des fluides sans pour autant engendrer une augmentation de l'encombrement dudit dispositif. Dans un mode de réalisation particulier selon l'invention, les panneaux horizontaux **33** comprennent une pluralité de perforations permettant l'écoulement des fluides vers l'espace situé entre les panneaux horizontaux **33** et le plateau de distribution **12.** Pour chaque panneau horizontal **33,** la surface occupée par lesdites perforations est comprise entre 1 et 20% en surface, de préférence entre 2 et 5 % en surface, par rapport à la surface totale du panneau horizontal **33.**

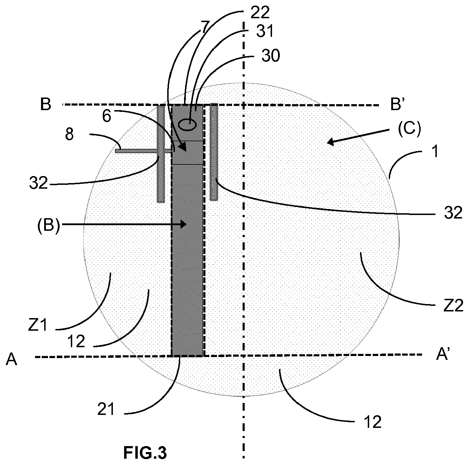

Dans un mode de réalisation particulier, l'enceinte d'échange **16** peut également comprendre sur ses parois latérales **20** des sections de passage latéral **17** apte au passage des fluides de la zone de mélange (B) à la zone de distribution (C). En complément, le dispositif peut comprendre éventuellement au moins un déflecteur latéral **32** (cf. figure 3) situé au niveau de ladite zone de distribution (C), en vis-à-vis d'au moins une section de passage latéral **17.** De préférence, le dispositif comprend au moins une paire de déflecteurs latéraux **32** situés dans la zone de distribution (C) de part et d'autre de l'enceinte d'échange **16** en vis-à-vis des sections de passage latéral **17.**

Avantageusement, la zone de mélange (B), i.e. l'enceinte de mélange **15** et l'enceinte d'échange **16,** est décentrée par rapport au centre de la zone de distribution (C) (cf. figure 3). Ce décalage de la zone de mélange par rapport au centre de la zone de distribution a pour avantage de faciliter les opérations d'inspection et de maintenance du dispositif. Cette configuration particulière du dispositif partage le plateau de distribution **12** en deux zones Z1 et Z2 de surfaces différentes, avec Z1 < Z2 (cf. figure 3). On définit les zones Z1 et Z2 respectivement comme la surface du plateau de distribution **12** comprise entre la paroi latérale **20** de l'enceinte d'échange **16,** la périphérie de l'enceinte **1** du réacteur, et respectivement les deux axes AA' et BB' (cf. figure 3) passant par les extrémités **21** et **22** de l'enceinte d'échange **16** (étant entendu que Z1 < Z2). On définit R comme étant le rapport entre la surface de la zone Z1 et de la zone Z2 (R = Z1 /Z2), étant entendu que R est compris entre 0 et 1, les valeurs 0 et 1 étant exclues.

Ainsi, lorsque le dispositif selon l'invention comprend des sections de passage latéral **17,** et afin de garantir une bonne distribution des fluides sur les deux zones Z1 et Z2 du plateau de distribution **12,** le débit des fluides traversant les sections de passage latéral **17** de l'enceinte d'échange **16** a été adapté en fonction du ratio R. Soit Sp la surface totale des sections de passage latéral **17** de la paroi latérale **20** en vis-à-vis de de la zone Z1 du plateau de distribution **12** (i.e. se trouvant du côté où la surface du plateau de distribution est la plus petite) et Sg la surface totale des sections de passage latéral **17** de la paroi latérale **20** en vis-à-vis de la zone Z2 du plateau de distribution **12** (i.e. se trouvant du côté où la surface du plateau de distribution est la plus grande). Selon l'invention, une bonne distribution des fluides sur les deux zones du plateau de distribution est obtenue si le ratio R' entre les surfaces Sp/Sg est compris entre 0,5 et 1,5, de préférence entre 0,6 et 1,4.

En effet, en l'absence de moyen particulier de distribution en sortie de l'enceinte d'échange **16,** les deux zones Z1 et Z2 du plateau de distribution **12** sont alimentées par des débits de fluide identiques, ce qui résulte en une mauvaise distribution des fluides, et donc induit une perte significative des performances de distribution des fluides sur le plateau de distribution **12.** Le dispositif selon l'invention, lorsqu'il comprend des sections de passage latéral **17** sur les parois **20** de l'enceinte d'échange **16,** dont la surface totale desdites sections est différente selon que l'on se trouve du côté où la surface de distribution est la plus petite (Z1) ou la plus grande (Z2), permet de générer en sortie de l'enceinte d'échange **16** des pertes de charge qui permettent d'ajuster les débits des fluides selon le ratio R (R=Z1/Z2).

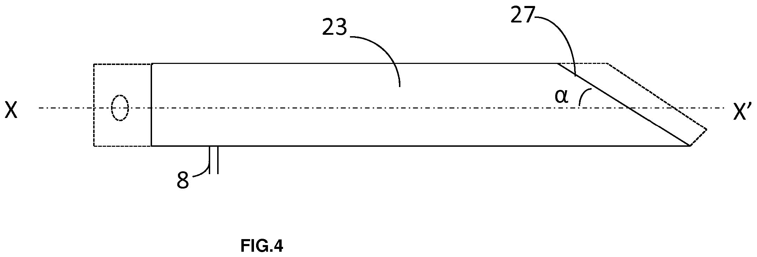

Avantageusement, le fond **23** de l'enceinte de mélange **15** (cf. figure 4) peut comprendre une bordure d'extrémité **27** de forme biseautée et forme un angle θ par rapport à l'axe longitudinal XX' de l'enceinte de mélange **15** compris entre 20° et 70°, de préférence entre 30° et 60° et encore plus préférentiellement entre 30° et 45°. Une telle forme de la bordure d'extrémité de l'enceinte de mélange **15** permet de créer un écoulement des fluides de type tourbillonnaire au niveau de l'ouverture **18** ce qui a pour effet d'améliorer l'efficacité de mélange des fluides, notamment en permettant un mélange entre elles des lignes de courant des fluide situées de part et d'autres des parois latérales de l'enceinte de mélange **15.** De plus, une telle configuration de l'enceinte de mélange **15** a pour effet de diminuer la vitesse des fluides entre l'enceinte de mélange et l'enceinte d'échange. En diminuant les vitesses de fluides au niveau, la perte de charge est minimisée.

Avantageusement, les extrémités des enceintes de mélange **15** et d'échange **16** ne sont pas en contact avec la paroi de l'enceinte du réacteur **1,** de manière à permettre la circulation des fluides sur le plateau de distribution **12** de part et d'autre des enceintes de mélange **15** et d'échange **16.** Avantageusement, l'enceinte de mélange **15** et la ou les enceinte(s) d'échange **16** constituent une seule pièce.

La hauteur H2 totale cumulée de ladite enceinte de mélange **15** et de ladite enceinte d'échange **16** est comprise entre 200 et 1500 mm, de préférence entre 200 et 800 mm, plus préférentiellement entre 300 et 750 mm, et encore plus préférentiellement entre 350 et 700 mm.

De préférence, la largeur « L » (cf. figure 2a) de l'enceinte d'échange **16** est comprise entre 200 et 1100 mm, de préférence entre 200 et 800 mm, plus préférentiellement entre 250 et 700 mm, et encore plus préférentiellement entre 300 et 600 mm.

Le ratio des volumes (en %) entre la ou les enceinte(s) d'échange **16** et l'enceinte de mélange **15** est compris entre 5 et 60 %, de préférence entre 10 et 60%, et encore plus préférentiellement entre 15 et 40%.

Dans un mode de réalisation selon l'invention, l'enceinte d'échange **16** est posée directement sur le plateau de distribution **12** (telle que représentée par exemple en figure 1 par exemple). Dans un autre mode de réalisation (non représenté sur les figures), l'enceinte d'échange **16** est située à une distance « d » dudit plateau de distribution **12,** de préférence comprise entre 20 et 150 mm, et plus préférentiellement comprise entre 30 et 80 mm. L'espace compris entre le plateau de distribution **12** et l'enceinte d'échange **16** permet la distribution des fluides sur toute la surface du plateau distributeur **12,** et donc permet d'homogénéiser la distribution du mélange des fluides sur toute la section du réacteur au-dessus du lit de catalyseur **14** situé en aval du dispositif de mélange et de distribution, dans le sens de la circulation des fluides (cf. notamment figure 1). Dans ce mode de réalisation, l'enceinte d'échange **16** peut comprendre en sa partie inférieure des sections de passage longitudinal afin que le mélange des fluides puisse s'écouler vers le plateau de distribution **12.** Bien entendu, le nombre, la forme et la taille des sections de passage longitudinal sont choisis de manière en ce qu'une fraction minoritaire du flux de mélange de fluides traverse lesdites sections de passage longitudinal. Les sections de passage longitudinal peuvent prendre indifféremment la forme d'orifices et/ou de fentes.

En-dessous du plateau de distribution **12,** un système de dispersion peut être positionné de manière à distribuer les fluides uniformément sur le lit de catalyseur **14** situé en aval dudit système. Le système de dispersion **19** (cf. figure 1) peut comprendre un ou plusieurs dispositifs de dispersion pouvant être associé à chaque cheminée **13,** être en commun à plusieurs cheminées **13,** ou encore être en commun à l'ensemble des cheminées **13** du plateau de distribution **12.** Chaque dispositif de dispersion **19** a une géométrie sensiblement plane et horizontale, mais peut avoir un périmètre de forme quelconque. Par ailleurs, chaque dispositif de dispersion **19** peut être situé à différentes hauteurs. Avantageusement, ledit dispositif de dispersion se présente sous la forme de grilles, et/ou peut comprendre éventuellement des déflecteurs. Avantageusement, l'axe de la ou des grille(s) **19** est préférentiellement perpendiculaire à l'axe longitudinal de l'enceinte du réacteur afin d'améliorer la distribution du mélange des fluides sur toute la section radiale de l'enceinte du réacteur. La distance séparant le système de dispersion du lit de solides granulaires situé immédiatement au-dessous est choisie de manière à conserver l'état de mélange des phases gazeuse et liquide autant que possible tel qu'il est en sortie des cheminées **13.**

De préférence, la distance entre le plateau de distribution **12** et lit de catalyseur **14** située en-dessous dudit plateau de distribution est comprise entre 50 et 400 mm, de préférence entre 100 et 300 mm. La distance entre le plateau de distribution **12** et ledit dispositif de dispersion **19** est comprise entre 0 et 400 mm, de préférence entre 0 et 300 mm. Dans un mode de réalisation particulier, le plateau de distribution **12** est posé sur le dispositif de dispersion **19.**

Par rapport aux dispositifs décrits dans l'art antérieur, et encore plus particulièrement par rapport au dispositif divulgué dans le document FR 3 034 323, le dispositif de mélange et de distribution selon l'invention présente les avantages suivants :
- une bonne compacité du fait de l'intégration à la même hauteur de la zone de mélange et de la zone de distribution des fluides ;
- une bonne efficacité thermique et une bonne efficacité de mélange des fluides ;
   - une bonne distribution des fluides sur le plateau de distribution **12,** due par la présence d'une ouverture longitudinale **31** de la boîte d'échange **16** et d'une pluralité de panneaux horizontaux **33** situés au-dessus de l'ouverture longitudinale **31** de la boîte d'échange **16,** et au-dessus des cheminées **13** ou sur les cheminées **13** du plateau de distribution **12.**

## Revendications

1. Dispositif de mélange et de distribution de fluides pour un réacteur catalytique à écoulement descendant, ledit dispositif comprenant :
- au moins une zone de collecte (A) comprenant au moins un moyen de collecte (5);
- au moins une conduite de collecte (7) sensiblement verticale apte à recevoir un fluide réactionnel collecté par ledit moyen de collecte (5) et au moins un moyen d'injection (8) débouchant dans ladite conduite de collecte (7) pour injecter un fluide de trempe ;
- au moins une zone de mélange (B), située en aval de ladite conduite de collecte (7) dans le sens de circulation des fluides, ladite zone de mélange (B) comprenant au moins un enceinte de mélange (15) des fluides de longueur L1', ladite zone de mélange (15) comprenant une première extrémité en communication avec ladite conduite de collecte (7) et une seconde extrémité en communication avec une enceinte d'échange (16) des fluides de longueur L2', située en-dessous et superposée à ladite enceinte de mélange (15) ;
- au moins une zone de distribution (C) située au même niveau que la zone de mélange (B), en aval de ladite zone de mélange (B) dans le sens de la circulation des fluides, ladite zone de distribution (C) comprenant un plateau de distribution (12) supportant une pluralité de cheminées (13) ;
**caractérisé en ce que** la longueur L2' de ladite enceinte d'échange (16) est strictement supérieure à la longueur L1' de ladite enceinte de mélange (15) de manière à créer un plafond (30) au niveau de ladite enceinte d'échange (16), ledit plafond (30) comprenant au moins une ouverture longitudinale (31) apte au passage des fluides de ladite enceinte d'échange (16) à ladite zone de distribution (C).

2. Dispositif selon la revendication 1, **caractérisé en ce que** le rapport entre la longueur L1' de l'enceinte de mélange (15) et la longueur L2' de l'enceinte d'échange (16) est compris entre 0,1 et 0,9.

3. Dispositif selon les revendications 1 ou 2, **caractérisé en ce que** le rapport entre la surface du plafond (30) et la surface de la ou les ouverture(s) longitudinale(s) (31) est compris entre 0,2 et 1.

4. Dispositif selon la revendication 3, **caractérisé en ce que** le rapport entre la surface du plafond (30) et la surface de la ou les ouverture(s) longitudinale(s) (31) est égal à 1.

5. Dispositif selon l'une quelconque des revendications 1 à 4, **caractérisé en ce qu'**il comprend en outre au moins une pluralité de panneaux horizontaux (33) situés dans la zone de distribution (C), en-dessous de l'ouverture (31) du plafond (30) de l'enceinte d'échange (16), et au-dessus des cheminées (13) ou sur les cheminées (13) du plateau de distribution (12).

6. Dispositif selon la revendication 5, **caractérisé en ce que** lesdits panneaux horizontaux (33) se situent à une hauteur comprise entre 0 et 10 cm au-dessus des cheminées (13) du plateau de distribution (12).

7. Dispositif selon la revendication 5, **caractérisé en ce que** lesdits panneaux horizontaux (33) sont espacés les uns des autres d'une distance comprise entre 0 et 5cm.

8. Dispositif selon l'une quelconque des revendications 1 à 7, **caractérisé en ce que** ladite enceinte d'échange (16) comprend en outre sur ses parois latérales (20) une pluralité de sections de passage latéral (17) apte au passage des fluides de ladite enceinte d'échange (16) à ladite zone de distribution (C).

9. Dispositif selon l'une quelconque des revendications 8, **caractérisé en ce qu'**il comprend en outre au moins un déflecteur latéral (32) situé au niveau de ladite zone de distribution (C) en vis-à-vis d'au moins une section de passage latéral (17).

10. Dispositif selon les revendications 8 ou 9, **caractérisé en ce qu'**il comprend une paire de déflecteurs latéraux (32) situés de part et d'autre de l'enceinte d'échange (16).

11. Dispositif selon l'une quelconque des revendications 1 à 10, **caractérisé en ce que** ladite zone de mélange (B) est décentrée par rapport à l'axe central de la zone de distribution (C), formant deux zones (Z1) et (Z2) sur le plateau de distribution (12) dont le ratio R définit comme le rapport entre la surface de la zone (Z1) et la zone (Z2) est compris entre 0 et 1, les valeurs 0 et 1 étant exclues.

12. Dispositif selon l'une quelconque des revendications 1 à 11, **caractérisé en ce que** le l'enceinte de mélange (15) comprend un fond (23) comportant une bordure d'extrémité (27) de forme biseautée et forme un angle θ par rapport à l'axe longitudinal XX' de l'enceinte de mélange (15) compris entre 20°et 70°.

13. Dispositif selon l'une quelconque des revendications 1 à 12, **caractérisé en ce que** le ratio volume entre ladite enceinte d'échange (16) et ladite enceinte de mélange (15) est compris entre 5 et 60 %.

14. Dispositif selon l'une quelconque des revendications 1 à 13, caractérisé en ce l'enceinte d'échange (16) est située à une distance « d » comprise entre 20 et 150 mm du plateau de distribution (12).

15. Réacteur catalytique à écoulement descendant comportant une enceinte (1) renfermant au moins deux lits fixes de catalyseur (2,14) séparés par une zone intermédiaire comportant un dispositif de mélange et de distribution de fluides selon l'une quelconque des revendications 1 à 14.

## Patentansprüche

1. Misch- und Verteilvorrichtung von Fluids für einen katalytischen Reaktor mit absteigender Strömung, wobei die Vorrichtung umfasst:
- mindestens eine Sammelzone (A), umfassend mindestens ein Sammelmittel (5);
- mindestens eine im Wesentlichen vertikale Sammelleitung (7), die dafür geeignet ist, ein Reaktionsfluid aufzunehmen, das von dem Sammelmittel (5) gesammelt wird, und mindestens ein Einspritzmittel (8), das in die Sammelleitung (7) mündet, um ein Abschreckmittel einzuspritzen;
- mindestens eine Mischzone (B), die stromabwärts der Sammelleitung (7) in der Fluidzirkulationsrichtung angeordnet ist, wobei die Mischzone (B) mindestens einen Fluidmischbehälter (15) mit einer Länge L1` umfasst, wobei die Mischzone (15) ein erstes Ende in Kommunikation mit der genannten Sammelleitung (7) und ein zweites Ende in Kommunikation mit einem Fluidaustauschbehälter (16) mit einer Länge L2' umfasst, der unter dem Mischbehälter (15) und diesen überlagernd angeordnet ist;
- mindestens eine Verteilzone (C), die auf derselben Ebene wie die Mischzone (B), stromabwärts der Mischzone (B) in der Fluidzirkulationsrichtung, angeordnet ist, wobei die Verteilzone (C) ein Verteilplateau (12) umfasst, das eine Vielzahl von Abzügen (13) stützt;
**dadurch gekennzeichnet, dass** die Länge L2' des Austauschbehälters (16) streng größer ist als die Länge L1' des Mischbehälters (15), um einen Plafond (30) auf der Ebene des Austauschbehälters (16) zu erzeugen, wobei der Plafond (30) mindestens eine Längsöffnung (31) umfasst, die für den Durchgang der Fluids von dem Austauschbehälter (16) in die Verteilzone (C) geeignet ist.

2. Vorrichtung nach Anspruch 1, **dadurch gekennzeichnet, dass** das Verhältnis zwischen der Länge L1` des Mischbehälters (15) und der Länge L2' des Austauschbehälters (16) zwischen 0,1 und 0,9 liegt.

3. Vorrichtung nach den Ansprüchen 1 oder 2, **dadurch gekennzeichnet, dass** das Verhältnis zwischen der Fläche des Plafonds (30) und der Fläche der Längsöffnung(en) (31) zwischen 0,2 und 1 liegt.

4. Vorrichtung nach Anspruch 3, **dadurch gekennzeichnet, dass** das Verhältnis zwischen der Fläche des Plafonds (30) und der Fläche der Längsöffnung(en) (31) gleich 1 ist.

5. Vorrichtung nach einem der Ansprüche 1 bis 4, **dadurch gekennzeichnet, dass** sie außerdem mindestens eine Vielzahl von horizontalen Platten (33) umfasst, die in der Verteilzone (C) unter der Öffnung (31) des Plafonds (30) des Austauschbehälters (16) und über den Abzügen (13) oder auf den Abzügen (13) des Verteilplateaus (12) angeordnet sind.

6. Vorrichtung nach Anspruch 5, **dadurch gekennzeichnet, dass** die horizontalen Platten (33) in einer Höhe zwischen 0 und 10 cm über den Abzügen (13) des Verteilplateaus (12) angeordnet sind.

7. Vorrichtung nach Anspruch 5, **dadurch gekennzeichnet, dass** die genannten horizontalen Platten (33) mit einer Distanz zwischen 0 und 5 cm voneinander beabstandet sind.

8. Vorrichtung nach einem der Ansprüche 1 bis 7, **dadurch gekennzeichnet, dass** der Austauschbehälter (16) außerdem an seinen lateralen Wänden (20) eine Vielzahl von lateralen Durchgangsausschnitten (17) umfasst, die für einen Durchgang von Fluids von dem Austauschbehälter (16) in die Verteilzone (C) geeignet sind.

9. Vorrichtung nach einem der Ansprüche 8, **dadurch gekennzeichnet, dass** sie außerdem mindestens einen lateralen Ablenker (32) umfasst, der auf der Ebene der Verteilzone (C) gegenüber mindestens einem lateralen Durchgangsausschnitt (17) angeordnet ist.

10. Vorrichtung nach den Ansprüchen 8 oder 9, **dadurch gekennzeichnet, dass** sie ein Paar lateraler Ablenker (32) umfasst, die auf beiden Seiten des Austauschbehälters (16) angeordnet sind.

11. Vorrichtung nach einem der Ansprüche 1 bis 10, **dadurch gekennzeichnet, dass** die Mischzone (B) in Bezug auf die zentrale Achse der Verteilzone (C) dezentriert ist, wobei zwei Zonen (Z1) und (Z2) auf dem Verteilplateau (12) gebildet werden, deren Verhältnis R, das als Verhältnis zwischen der Fläche der Zone (Z1) und der Zone (Z2) definiert ist, zwischen 0 und 1 liegt, wobei die Werte 0 und 1 ausgeschlossen sind.

12. Vorrichtung nach einem der Ansprüche 1 bis 11, **dadurch gekennzeichnet, dass** der Mischbehälter (15) einen Boden (23) umfasst, welcher einen Endrand (27) mit einer abgeschrägten Form umfasst, der einen Winkel θ in Bezug auf die Längsachse XX' des Mischbehälters (15) zwischen 20° und 70° bildet.

13. Vorrichtung nach einem der Ansprüche 1 bis 12, **dadurch gekennzeichnet, dass** das Volumenverhältnis zwischen dem Austauschbehälter (16) und dem Mischbehälter (15) zwischen 5 und 60 % liegt.

14. Vorrichtung nach einem der Ansprüche 1 bis 13, **dadurch gekennzeichnet, dass** der Austauschbehälter (16) mit einer Distanz "d" zwischen 20 und 150 mm von dem Verteilplateau (12) angeordnet ist.

15. Katalytischer Reaktor mit absteigender Strömung, umfassend einen Behälter (1), der mindestens zwei Katalysatorfestbetten (2, 14) umschließt, die durch eine Zwischenzone getrennt sind, umfassend eine Misch- und Verteilvorrichtung von Fluids nach einem der Ansprüche 1 bis 14.

## Claims

1. Device for mixing and distributing fluids for a downflow catalytic reactor, said device comprising:
- at least one collecting zone (A) comprising at least one collecting means (5);
- at least one substantially vertical collecting pipe (7) that is able to receive a reaction fluid collected by said collecting means (5) and at least one injection means (8) opening into said collecting pipe (7) in order to inject a quench fluid;
- at least one mixing zone (B), situated downstream of said collecting pipe (7) in the direction of flow of the fluids, said mixing zone (B) comprising at least one fluid mixing chamber (15) of length L1', said mixing zone (15) comprising a first end in communication with said collecting pipe (7) and a second end in communication with a fluid exchange chamber (16) of length L2', situated underneath and superposed with said mixing chamber (15);
- at least one distribution zone (C) situated at the same level as the mixing zone (B), downstream of said mixing zone (B) in the direction of flow of the fluids, said distribution zone (C) comprising a distribution plate (12) supporting a plurality of chimneys (13) ;
**characterized in that** the length L2' of said exchange chamber (16) is strictly greater than the length L1' of said mixing chamber (15) so as to create a ceiling (30) on said exchange chamber (16), said ceiling (30) comprising at least one longitudinal opening (31) suitable for the passage of the fluids from said exchange chamber (16) to said distribution zone (C).

2. Device according to Claim 1, **characterized in that** the ratio between the length L1' of the mixing chamber (15) and the length L2' of the exchange chamber (16) is between 0.1 and 0.9.

3. Device according to Claims 1 or 2, **characterized in that** the ratio between the surface area of the ceiling (30) and the surface area of the longitudinal opening(s) (31) is between 0.2 and 1.

4. Device according to Claim 3, **characterized in that** the ratio between the surface area of the ceiling (30) and the surface area of the longitudinal opening(s) (31) is equal to 1.

5. Device according to any one of Claims 1 to 4, **characterized in that** it further comprises at least one plurality of horizontal panels (33) situated in the distribution zone (C), underneath the opening (31) in the ceiling (30) of the exchange chamber (16), and above the chimneys (13) or over the chimneys (13) of the distribution plate (12).

6. Device according to Claim 5, **characterized in that** said horizontal panels (33) are situated at a height of between 0 and 10 cm above the chimneys (13) of the distribution plate (12).

7. Device according to Claim 5, **characterized in that** said horizontal panels (33) are spaced apart from one another by a distance of between 0 and 5 cm.

8. Device according to any one of Claims 1 to 7, **characterized in that** said exchange chamber (16) also comprises, on its lateral walls (20), a plurality of lateral passage sections (17) suitable for the passage of the fluids from said exchange chamber (16) to said distribution zone (C).

9. Device according to any one of Claims 8, **characterized in that** it also comprises at least one lateral deflector (32) situated in said distribution zone (C) opposite at least one lateral passage section (17) .

10. Device according to Claims 8 or 9, **characterized in that** it comprises a pair of lateral deflectors (32) situated one on each side of the exchange chamber (16).

11. Device according to any one of Claims 1 to 10, **characterized in that** said mixing zone (B) is off-center with respect to the central axis of the distribution zone (C), forming on the distribution plate (12) two zones (Z1) and (Z2) of which the ratio R, defined as the ratio between the surface area of the zone (Z1) and the zone (Z2), is between 0 and 1, excluding the values 0 and 1.

12. Device according to any one of Claims 1 to 11, **characterized in that** the mixing chamber (15) comprises a bottom (23) having an end edge (27) that has a beveled shape and forms an angle θ of between 20° and 70° with the longitudinal axis XX' of the mixing chamber (15) .

13. Device according to any one of Claims 1 to 12, **characterized in that** the volume ratio between said exchange chamber (16) and said mixing chamber (15) is between 5 and 60%.

14. Device according to any one of Claims 1 to 13, **characterized in that** the exchange chamber (16) is situated at a distance "d" of between 20 and 150 mm away from the distribution plate (12).

15. Downflow catalytic reactor having a chamber (1) containing at least two fixed catalyst beds (2, 14) separated by an intermediate zone having a device for mixing and distributing fluids according to any one of Claims 1 to 14.
